# EUROPEAN PATENT SPECIFICATION

(11) **EP 4 604 639 B1**
(45) Date of publication and mention of the grant of the patent: **02.12.2026**
(21) Application number: 25180281.5
(22) Date of filing: 11.01.2019
(51) Int. Cl.: H04W 72/04

(54) **RESOURCE ALLOCATION METHOD, TERMINAL, AND NETWORK SIDE DEVICE**
RESSOURCENZUWEISUNGSVERFAHREN, ENDGERÄT UND NETZWERKSEITIGE VORRICHTUNG
PROCÉDÉ D'ATTRIBUTION DE RESSOURCES, TERMINAL ET DISPOSITIF CÔTÉ RÉSEAU

(30) Priority: 09.02.2018 CN 201810135758
(43) Date of publication of application: 20.08.2025
(62) Document number(s) of the earlier application(s) in accordance with Art. 76 EPC: 22163619.4 / 4 037 405; 19751217.1 / 3 751 937
(73) Proprietor: Datang Mobile Communications Equipment Co., Ltd., Beijing 100085 (CN)
(72) Inventor: WANG, Lei, Beijing 100191 (CN); XING, Yanping, Beijing 100191 (CN)
(74) Representative: EIP

(56) References cited:
- INTEL CORPORATION: "Remaining details on TBS determination and resource allocation", vol. RAN WG1, no. Reno, USA; 20171127 - 20171201, 18 November 2017 (2017-11-18), XP051369775, Retrieved from the Internet <URL:http://www.3gpp.org/ftp/tsg%5Fran/WG1%5FRL1/TSGR1%5F91/Docs/> [retrieved on 20171118]
- NTT DOCOMO ET AL: "Frequency-domain resource allocation", vol. RAN WG1, no. Prague, Czechia; 20170821 - 20170825, 20 August 2017 (2017-08-20), XP051316740, Retrieved from the Internet <URL:http://www.3gpp.org/ftp/Meetings_3GPP_SYNC/RAN1/Docs/> [retrieved on 20170820]
- INTEL CORPORATION: "Remaining aspects for carrier aggregation and bandwidth parts", vol. RAN WG1, no. Nagoya, Japan; 20170918 - 20170921, 17 September 2017 (2017-09-17), XP051339783, Retrieved from the Internet <URL:http://www.3gpp.org/ftp/Meetings_3GPP_SYNC/RAN1/Docs/> [retrieved on 20170917]

## Description

### TECHNICAL FIELD

The present disclosure relates to the field of telecommunication technology, and in particular to a resource allocation (RA) method, a terminal, and a network side device.

### BACKGROUND

The concept of bandwidth part (BWP) has been introduced into a fifth-generation (5G) communication system. In addition, in a 5G communication system, a common search space (CSS) corresponding to a terminal may be transmitted in an initial downlink (DL) BWP configured in a physical broadcast channel (PBCH). To avoid the problem of an indeterminate length of downlink control information (DCI), the length of an RA field in the DCI may be determined by the initial DL BWP. During actual application, an activated BWP of a terminal may be far greater than the initial DL BWP or less than the initial DL BWP. However, the length of the RA field in the DCI is determined by the initial DL BWP, which leads to poor flexibility in resource allocation.

INTEL CORPORATION: "Remaining details on TBS determination and resource allocation", 3GPP DRAFT; R1-1720094 INTEL TBS_RA, 3RD GENERATION PARTNERSHIP PROJECT (3GPP), 18 November, URL:http://www.3gpp.org/ftp/tsg%5Fran/WG1%5FRL1/TSGR1%5F91/Docs/, describes, according to its introduction, remaining details of TBS determination and DL/UL resource allocation in time and frequency domains. Section 2 presents their views on TBS determination. Section 3 discusses some aspects of time domain resource allocation. Section 4 discusses frequency domain resource allocation.

### SUMMARY

The present invention to which this European patent relates is set out in the appended set of claims including independent terminal claim 1, and independent network side device claim 9.

Accoring to the invention, a terminal receives, within an activated BWP, DCI transmitted by a network side device, where the DCI includes an RA field; and the terminal determines, according to the size of the activated BWP, an RA granularity of the RA field according to floor (BWP_{current} / BWPᵢₙᵢₜᵢₐₗ). User equipment (UE) determines, according to the size of the activated BWP, the RA granularity of the RA field, so that the flexibility of RA can be improved.

### BRIEF DESCRIPTION OF THE DRAWINGS

Fig. 1 is a schematic diagram of a network structure to which embodiments of the present disclosure are applicable;
Fig. 2 is a flowchart of an RA method according to an embodiment of the present disclosure;
Fig. 3 is a schematic diagram of an activated BWP, an initial BWP, and a CORESETO according to an embodiment of the present disclosure;
Fig. 4 is a flowchart of another RA method according to an embodiment of the present disclosure;
Fig. 5 is a structural diagram of a terminal according to an embodiment of the present disclosure;
Fig. 6 is a structural diagram of a network side device according to an embodiment of the present disclosure;
Fig. 7 is another structural diagram of a network side device according to an embodiment of the present disclosure;
Fig. 8 is another structural diagram of a terminal according to an embodiment of the present disclosure;
Fig. 9 is still another structural diagram of a network side device according to an embodiment of the present disclosure.

### DETAILED DESCRIPTION

To make the technical problems, the technical solutions, and advantages of the present disclosure clearer, detailed descriptions are provided below with reference to the accompanying drawings and specific embodiments.

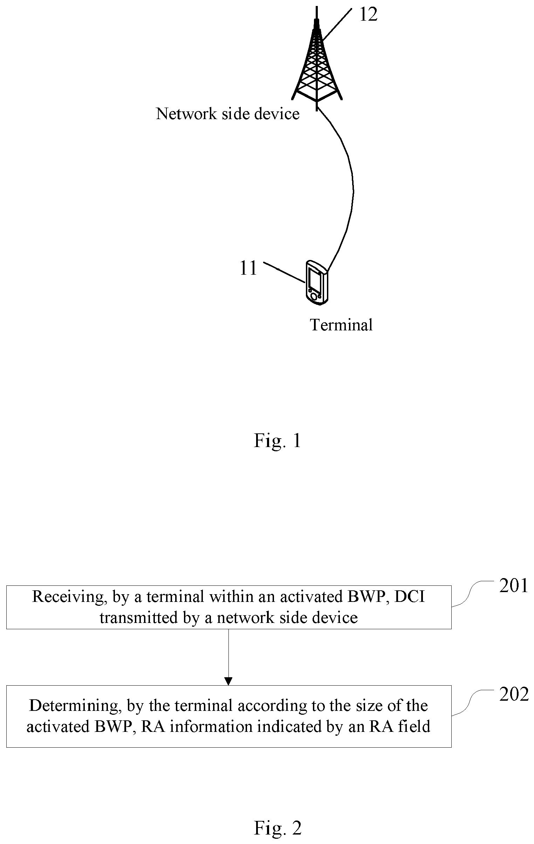

Referring to Fig. 1, Fig. 1 is a schematic diagram of a network structure to which embodiments of the present disclosure are applicable. As shown in Fig. 1, the network structure includes a terminal 11 and a network side device 12. The terminal 11 may be user equipment (UE) or other terminal device, e.g., a terminal side device such as a mobile phone, a tablet personal computer, a laptop computer, a personal digital assistant (PDA), a mobile Internet device (MID) or a wearable device. It needs to be noted that the specific type of the terminal 11 is not limited in the embodiments of the present disclosure. The network side device 12 may be a base station, for example, a macro base station, a long term evolution (LTE) evolved node B (eNB) or a 5G New Radio (NR) node B (NB). The network side device 12 may be a small base station, for example, a low power node (LPN), a pico base station or a femto base station. Alternatively, the network side device 12 may be an access point (AP). The base station may be a network node formed by a central unit (CU) and a plurality of transmission reception points (TRPs) managed and controlled by the CU. It needs to be noted that the specific type of the network side device 12 is not limited in the embodiments of the present disclosure.

Referring to Fig. 2, Fig. 2 is a flowchart of an RA method according to an embodiment of the present disclosure. As shown in Fig. 2, the method includes the following steps.

A step 201 includes: receiving, by a terminal within an activated BWP, DCI transmitted by a network side device, where the DCI includes an RA field.

A step 202 includes: determining, by the terminal according to the size of the activated BWP, RA information indicated by the RA field.

The activated BWP may be a BWP activated for the terminal. The activated BWP may be referred to as a current BWP of the terminal.

The DCI may be DCI used for scheduling the terminal for data transmission. The RA field may be used for indicating a resource allocated by the network side device for data transmission, so that the data transmission performed by the terminal in the activated BWP occupies the resource indicated by the RA field.

The size of the activated BWP may also be referred to as the actual size of the activated BWP, for example, a quantity of RBs included in the activated BWP, or a quantity of RA granularities used for RA in the activated BWP. Here, an RA granularity used for RA may be an RA granularity available for RA.

The determining, by the terminal according to the size of the activated BWP, the RA information indicated by the RA field may include: parsing the RA field according to the size of the activated BWP, to determine the RA information indicated by the information bits of the RA field. For example, the RA information indicates that the data transmission occupies the 0^{th} to 10^{th} VRBs or the RA information indicates that the data transmission occupies the 0^{th} to 20^{th} VRBs, or the like.

Considering that the length of the RA field in the DCI may be determined by an initial DL BWP, and the size of the activated BWP may be different from the size of the initial DL BWP, for example, the activated BWP of the terminal may be far greater than the initial DL BWP or is less than the initial DL BWP, by determining the RA information indicated by the RA field according to the size of the activated BWP, the flexibility of RA can be improved, and a change in the length of the RA field can be avoided, thereby reducing the complexity of RA.

Optionally, the DCI is transmitted in a CSS within a CORESETO, the activated BWP includes the entire CORESETO, and the CORESETO is a CORESET configured in a PBCH.

That the activated BWP includes the entire CORESETO may mean that the CORESETO is completely located in the activated BWP. In the implementation, because the activated BWP includes the entire CORESETO, UE only needs to search in the CSS of the CORESETO, thereby reducing the power consumption of the UE.

Optionally, the DCI includes DCI whose CRC code is scrambled with a specific RNTI; and/or
the length of the RA field is determined according to a size of an initial BWP of the terminal based on an RA granularity being one VRB.

The specific RNTI includes, but is not limited to, a unicast scheduling-related RNTI such as a cell RNTI (C-RNTI) or a temporary C-RNTI (TC-RNTI) or a configured scheduling RNTI (CS-RNTI) or a semi-persistent channel state information RNTI (SP-CSI-RNTI). Optionally, the DCI may be fallback DCI transmitted in the CSS within the CORESETO. The DCI may be fallback DCI for scheduling unicast data.

The initial BWP may be an initial DL BWP. In the implementation, it may be implemented that, although the length of the RA field is determined according to a size of an initial BWP of the terminal based on an RA granularity being one VRB, the terminal determines, when parsing the RA field, the RA information indicated by the RA field according to the size of the activated BWP, so that the flexibility of RA can be improved.

In an optional implementation, the determining, by the terminal according to the size of the activated BWP, the RA information indicated by the RA field includes:
determining, by the terminal, an RA granularity of the RA field according to the size of the activated BWP, and determining, by the terminal according to the RA granularity, the RA information indicated by the RA field.

The RA granularity of the RA field may be an RA granularity for parsing the RA field, for example, one VRB, two VRBs or the like. The determining, according to the RA granularity, the RA information indicated by the RA field may include: parsing the RA field based on the RA granularity to determine the RA information.

It needs to be noted that after the RA granularity of the RA field is determined, the RA information indicated by the RA field is determinate. For example, if the RA granularity is two VRBs, and the information bits of the RA field represents the 0^{th} to 5^{th} resource units, it is determined that each resource unit is two VRBs, that is, the RA information indicated by the RA field is the 0^{th} to 10^{th} VRBs. In another example, if the RA granularity is two VRBs, and the RA field includes a bitmap, each bit in the bitmap represents two VRBs.

In addition, the determining, by the terminal, the RA granularity of the RA field according to the size of the activated BWP may include determining the RA granularity according to the size of the activated BWP and the length of the RA field. For example, the terminal may determine the RA granularity according to a preconfigured mapping relationship between the size of the activated BWP, the length of the RA field and the RA granularity. Alternatively, the determining, by the terminal, the RA granularity of the RA field according to the size of the activated BWP may include determining, by the terminal, the RA granularity according to a pre-acquired mapping relationship between the size of the activated BWP and the RA granularity.

In the implementation, the RA granularity of the RA field is determined according to the size of the activated BWP, so that the flexibility of RA is further improved, and it is not necessary to adjust the length of the RA field according to the size of the activated BWP, thereby reducing implementation costs.

Optionally, the determining, by the terminal, the RA granularity of the RA field according to the size of the activated BWP includes:
determining, by the terminal, the RA granularity of the RA field according to a comparison result between the size of the activated BWP and the size of an initial BWP.

Since the length of the RA field in the DCI may be determined by the initial BWP, in the implementation, by determining the RA granularity according to the comparison result, it may be implemented that different RA information are indicated according to different activated BWPs while the length of the RA field is kept unchanged, thereby further improving the flexibility of RA. In addition, the length of the RA field may further be prevented from being changed, thereby reducing the complexity of RA.

Optionally, the determining, by the terminal, the RA granularity of the RA field according to the comparison result between the size of the activated BWP and the size of the initial BWP includes:
if the size of the activated BWP is greater than the size of the initial BWP, determining, by the terminal, that the RA granularity of the RA field is N VRBs, where N is an integer obtained by rounding down a quotient, and the quotient is a quotient of dividing the size of the activated BWP by the size of the initial BWP; or
if the size of the activated BWP is greater than the size of the initial BWP, determining, by the terminal, that the RA granularity of the RA field is M VRBs, where M is an integer obtained by rounding up a quotient, and the quotient is a quotient of dividing the size of the activated BWP by the size of the initial BWP; or
if the size of the activated BWP is less than or equal to the size of the initial BWP, determining, by the terminal, that the RA granularity of the RA field is one VRB.

The size of the activated BWP may be a quantity of RBs included in the activated BWP. The size of the initial BWP may be a quantity of RBs included in the initial BWP. N may be determined according to G = floor (BWP_{currend}BWPᵢₙᵢₜᵢₐₗ), where the value of G is N, floor represents rounding down, BWP_{current} represents the quantity of RBs included in the activated BWP, and BWPᵢₙᵢₜᵢₐₗ represents the quantity of RBs included in the initial BWP. Certainly, in the embodiments of the present disclosure, the size of the BWP is not limited to the quantity of RBs included in the BWP. For example, the size of the BWP may alternatively be a quantity in units of other resource granularities.

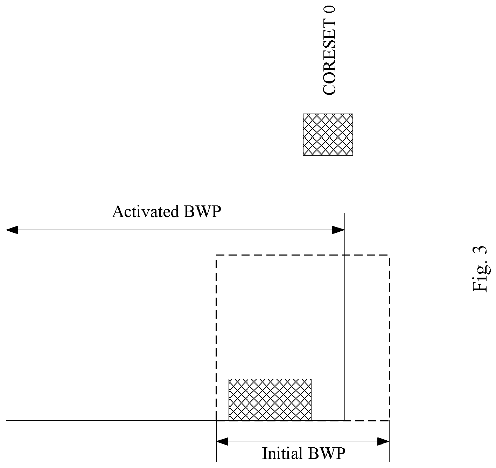

For example, as shown in Fig. 3, the CORESETO configured in the PBCH is completely located in the activated BWP, and the network side device transmits, in the CSS in the CORESETO, the DCI for scheduling unicast data transmission. In this example, the CRC code of the DCI is scrambled with the C-RNTI. Certainly, scrambling with another type of RNTI such as a TC-RNTI, a CS-RNTI or an SP-CSI-RNTI is not excluded.

Assuming that the activated BWP is greater than the initial BWP, the RA granularity is determined by using the formula G = floor(BWP_{currend}BWPᵢₙᵢₜᵢₐₗ), where floor represents rounding down, BWP_{current} represents the quantity of RBs included in the activated BWP, and BWPᵢₙᵢₜᵢₐₗ represents the quantity of RBs included in the initial BWP. In this example, assuming that an initial DL BWP includes 25 physical resource blocks (PRBs), and the activated BWP includes 50 PRBs, then G = floor(50/25) = 2. After the terminal detects and receives the RA field in the DCI, the terminal interprets it according to a RA granularity of two VRBs. For example, the RA field (which may also be referred to as a resource indication field) indicates that the data transmission of the terminal in the activated BWP occupies the 0^{th} to 5^{th} resource units. Correspondingly, the occupied resource positions are the 0^{th} to 10^{th} VRBs. When the activated BWP is less than the initial BWP, the RA granularity is one VRB.

Similarly, M may also be determined by using the formula G = ceil (BWP_{current}/BWPᵢₙᵢₜᵢₐₗ), where the value of G is M, ceil represents rounding up, BWP_{current} represents the quantity of RBs included in the activated BWP, and BWPᵢₙᵢₜᵢₐₗ represents the quantity of RBs included in the initial BWP.

For example, the CORESETO configured in the PBCH is completely located in the activated BWP, and the network side device transmits, in the CSS in the CORESETO, the DCI for scheduling unicast data transmission. In this example, the CRC code of the DCI is scrambled with C-RNTI. Certainly, scrambling with another type of RNTI such as a TC-RNTI, a CS-RNTI or an SP-CSI-RNTI is not excluded.

Assuming that the activated BWP is greater than the initial BWP, in an embodiment useful for understanding the invention to which this European patent relates, the RA granularity is determined by using the formula G = ceil(BWP_{current}/BWPᵢₙᵢₜᵢₐₗ), where ceil represents rounding up, BWP_{current} represents the quantity of RBs included in the activated BWP, and BWPᵢₙᵢₜᵢₐₗ represents the quantity of RBs included in the initial BWP. In this example, assuming that the initial BWP includes 25 PRBs, and the activated BWP includes 50 PRBs, then G = ceil(50/25) = 2. After the terminal detects and receives the RA field in the DCI, the terminal interprets it according to a RA granularity of two VRBs. For example, the RA field (which may also be referred to as a resource indication field) indicates that the data transmission of the terminal in the activated BWP occupies the 0^{th} to 5^{th} resource units. Correspondingly, the occupied resource positions are the 0^{th} to 10^{th} VRBs. When the activated BWP is less than the initial BWP, the RA granularity is one VRB.

In the implementation, if the size of the activated BWP is greater than the size of the initial BWP, it may be determined that the RA granularity of the RA field is N or M VRBs, or if the size of the activated BWP is less than or equal to the size of the initial BWP, it may be directly determined that the RA granularity of the RA field is one VRB, so that the flexibility of RA can further be improved.

Optionally, if the RA granularity is M VRBs, the first $\left⌈{log}_{2}\left({N}_{G}^{BWP}\left({N}_{G}^{BWP}+1\right)/2\right)\right⌉$ bits in the RA field are valid or the last $\left⌈{log}_{2}\left({N}_{G}^{BWP}\left({N}_{G}^{BWP}+1\right)/2\right)\right⌉$ bits in the RA field are valid, where ┌ ┐ is rounding up, and ${N}_{G}^{BWP}$ is a quantity of RA granularities used for RA in the activated BWP.

The quantity of RA granularities used for RA in the activated BWP may be the quantity of RA granularities (M VRBs) available for RA in the activated BWP.

In this way, if the RA granularity is M VRBs, when determining the RA information, the terminal only uses the first $\left⌈{log}_{2}\left({N}_{G}^{BWP}\left({N}_{G}^{BWP}+1\right)/2\right)\right⌉$ bits or last $\left⌈{log}_{2}\left({N}_{G}^{BWP}\left({N}_{G}^{BWP}+1\right)/2\right)\right⌉$ bits in the RA field, so that the flexibility and accuracy of RA are further improved. In addition, during RA, the network side device only uses the first $\left⌈{log}_{2}\left({N}_{G}^{BWP}\left({N}_{G}^{BWP}+1\right)/2\right)\right⌉$ bits or last $\left⌈{log}_{2}\left({N}_{G}^{BWP}\left({N}_{G}^{BWP}+1\right)/2\right)\right⌉$ bits in the RA field to perform resource allocation.

In an optional implementation, the determining, by the terminal according to the size of the activated BWP, the RA information indicated by the RA field includes:
performing, by the terminal, a padding operation or a truncation operation on the RA field according to the size of the activated BWP to obtain target information, and determining the RA information according to the target information.

The determining the RA information according to the target information may refer to determining the RA information indicated by the target information. In addition, in the implementation, the RA information indicated by the target information may be determined based on an RA granularity being one RB.

In the implementation, the padding operation or the truncation operation may be performed on the RA field according to the size of the activated BWP, and the RA information is determined according to the obtained information, so that the flexibility of RA can further be improved.

In addition, in the implementation, according to a pre-acquired mapping relationship between the size of the BWP and a padding operation or truncation operation, it may be determined to perform the padding operation or the truncation operation, and further the length of the padding operation or the truncation operation may be determined. Optionally, the performing, by the terminal, the padding operation or the truncation operation on the RA field according to the size of the activated BWP to obtain the target information, and determining the RA information according to the target information includes:
performing, by the terminal, the padding operation or the truncation operation on the RA field according to a comparison result between the size of the activated BWP and the size of an initial BWP to obtain the target information, and determining the RA information according to the target information.

Since the length of the RA field in the DCI may be determined by the initial BWP, in the implementation, by performing the padding operation or the truncation operation on the RA field according to a comparison result and further determining the RA information, it may be implemented that different RA information are indicated according to different activated BWPs while the length of the RA field is kept unchanged, thereby further improving the flexibility of RA. In addition, the length of the RA field may further be prevented from being changed, thereby reducing the complexity of RA.

Optionally, the performing, by the terminal, the padding operation or the truncation operation on the RA field according to the comparison result between the size of the activated BWP and the size of the initial BWP to obtain the target information, and determining the RA information according to the target information includes:
if the size of the activated BWP is greater than the size of the initial BWP, determining, by the terminal, a target length of the RA field, after the bits of the RA field are obtained through decoding, first padding L-L_{RA} 0s or 1s, by the terminal, before the bits of the RA field to obtain the target information with L bits, and then determining, by the terminal, the RA information according to the target information with the L bits, where L is equal to the target length, and L_{RA} is the length of the RA field; or
if the size of the activated BWP is greater than the size of the initial BWP, determining, by the terminal, a target length of the RA field, after the bits of the RA field are obtained through decoding, first padding L-L_{RA} 0s or 1s, by the terminal, after the bits of the RA field to obtain the target information with L bits, and then determining, by the terminal, the RA information according to the target information with the L bits, where L is equal to the target length, and L_{RA} is the length of the RA field; or
if the size of the activated BWP is less than the size of the initial BWP, determining, by the terminal, a target length of the RA field, after the bits of the RA field are obtained through decoding, first performing, by the terminal, truncation on the bits of the RA field to obtain first L bits or last L bits to obtain the target information with the L bits, and then determining, by the terminal, the RA information according to the target information with the L bits, where L is equal to the target length.

In this implementation, it may be implemented that padding is performed on the RA field if the size of the activated BWP is greater than the size of the initial BWP, and truncation is performed if the size of the activated BWP is less than the size of the initial BWP, therefore it may be implemented that RA is performed for the activated BWPs with different sizes while the length of the RA field in the DCI transmitted by the network side device remains unchanged, so that the flexibility of RA is improved, and the length of the RA field is prevented from being changed, thereby reducing the complexity of RA.

Optionally, $L = \left⌈{log}_{2}\left({N}_{RB}^{currentBWP}\left({N}_{RB}^{currentBWP}+1\right)/2\right)\right⌉$, where ┌ ┐ is rounding up, and ${N}_{RB}^{currentBWP}$ is a quantity of RBs in the activated BWP.

For example, the CORESETO configured in the PBCH is completely located in the activated BWP, and a base station transmits, in the CSS in the CORESETO, the DCI for scheduling unicast data transmission. In this example, the CRC code of the DCI is scrambled with the C-RNTI. Certainly, scrambling with another type of RNTI such as a TC-RNTI, a CS-RNTI or an SP-CSI-RNTI is not excluded. It is assumed that the initial BWP includes 25 PRBs, and the activated BWP includes 50 PRBs.

The terminal detects and receives the DCI. Having received the DCI successfully, the terminal first performs the padding operation or the truncation operation on the RA field in the DCI according to the size of the current BWP. When the activated BWP is greater than the initial BWP, the padding operation needs to be performed on the RA field. A target length $L = \left⌈{log}_{2}\left({N}_{RB}^{currentBWP}\left({N}_{RB}^{currentBWP}+1\right)/2\right)\right⌉$ of the padding operation is determined, where ${N}_{RB}^{currentBWP}$ is a quantity of RBs included in the currently activated BWP. In the embodiment, L = 11 bits, and L_{RA} = 9 bits. That is, 2 bits need to be padded for the RA field in the DCI. L_{RA} is the length of an RA indication field carried in the DCI. The information bits 0 or 1 of the 2 bits may be added before or after the 9-bit information. The terminal determines the RA of data transmission in the activated BWP according to the new 11-bit information obtained from the padding.

In another example, the CORESETO configured in the PBCH is completely located in the activated BWP, and a base station transmits, in the CSS in the CORESETO, the DCI for scheduling unicast data transmission. In this example, the CRC code of the DCI is scrambled with the C-RNTI. Certainly, scrambling with another type of RNTI such as a TC-RNTI, a CS-RNTI or an SP-CSI-RNTI is not excluded. It is assumed that the initial BWP includes 50 PRBs, and the activated BWP includes 25 PRBs.

The terminal detects and receives the DCI. Having received the DCI successfully, the terminal first performs the padding operation or the truncation operation on the RA field in the DCI according to the size of the current BWP. When the activated BWP is less than the initial BWP, the truncation operation needs to be performed on the RA field. A target length $L = \left⌈{log}_{2}\left({N}_{RB}^{currentBWP}\left({N}_{RB}^{currentBWP}+1\right)/2\right)\right⌉$ of the truncation is determined, where ${N}_{RB}^{currentBWP}$ is a quantity of RBs included in the currently activated BWP. In this example, L = 9 bits, and L_{RA} = 11 bits. L_{RA} is the length of an RA indication field carried in the DCI. The network side device uses the first L bits or the last L bits in the L_{RA}-bit information carried in the DCI to indicate RA for data. After detecting and receiving the DCI, the terminal performs a truncation on the 11 bits to obtain the first 9 bits or last 9 bits, to determine the RA for a data channel in the activated BWP.

In the implementation, the target length may be determined according to the foregoing formula. The formula is applicable to activated BWPs of different sizes, to improve the compatibility of the RA method provided in the embodiments of the present disclosure. Certainly, in the embodiments of the present disclosure, it is not limited that the target length is determined by using the foregoing formula. For example, the target length may be determined according to a preset mapping relationship between the size of a BWP and the target length.

It needs to be noted that in the embodiments of the present disclosure, the terminal and the network side device have a consensus with respect to the RA field and the RA granularity. When configuring the RA field in the DCI, the network side device also performs configuration according to the RA granularity.

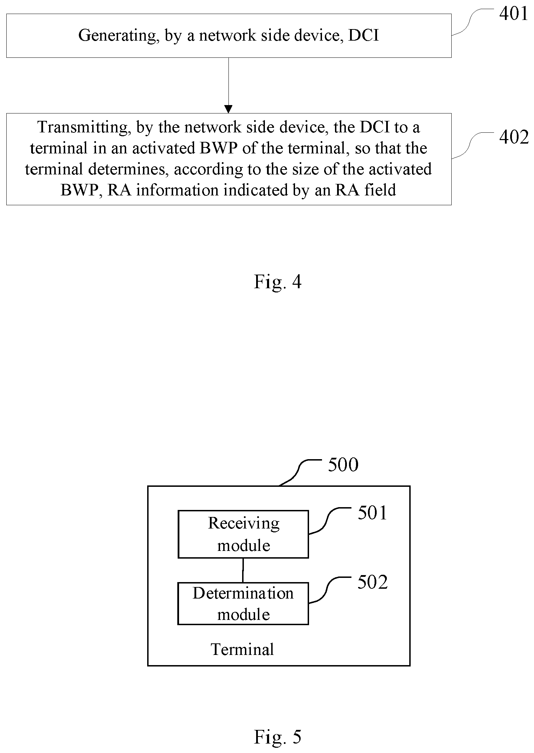

Referring to Fig. 4, Fig. 4 is a flowchart of another RA method according to an embodiment of the present disclosure. As shown in Fig. 4, the method includes the following steps.

A step 401 includes: generating, by a network side device, DCI, where the DCI includes an RA field.

A step 402 includes: transmitting, by the network side device, the DCI to a terminal in an activated BWP of the terminal, so that the terminal determines, according to the size of the activated BWP, RA information indicated by the RA field.

Optionally, the DCI is transmitted in a CSS within a CORESETO, the activated BWP includes the entire CORESETO, and the CORESETO is a CORESET configured in a PBCH.

The method further includes:
determining, by the network side device, an RA granularity of the RA field according to the size of the activated BWP; and, optionally,
determining, by the network side device, that an RA granularity of the RA field is one VRB.

It needs to be noted that the network side device determines the RA granularity. In this case, the RA field included in the DCI is configured according to the determined RA granularity.

Optionally, the determining, by the network side device, the RA granularity of the RA field according to the size of the activated BWP includes:
determining, by the network side device, the RA granularity of the RA field according to a comparison result between the size of the activated BWP and the size of an initial BWP.

Optionally, the determining, by the network side device, the RA granularity of the RA field according to the comparison result between the size of the activated BWP and the size of the initial BWP includes:
if the size of the activated BWP is greater than the size of the initial BWP, determining, by the network side device, that the RA granularity of the RA field is N VRBs, where N is an integer obtained by rounding down a quotient, and the quotient is a quotient of dividing the size of the activated BWP by the size of the initial BWP; or
if the size of the activated BWP is greater than the size of the initial BWP, determining, by the network side device, that the RA granularity of the RA field is M VRBs, where M is an integer obtained by rounding up a quotient, and the quotient is a quotient of dividing the size of the activated BWP by the size of the initial BWP; or
if the size of the activated BWP is less than or equal to the size of the initial BWP, determining, by the network side device, that the RA granularity of the RA field is one VRB.

Optionally, if the RA granularity is M VRBs, the first $\left⌈{log}_{2}\left({N}_{G}^{BWP}\left({N}_{G}^{BWP}+1\right)/2\right)\right⌉$ bits in the RA field are valid or the last $\left⌈{log}_{2}\left({N}_{G}^{BWP}\left({N}_{G}^{BWP}+1\right)/2\right)\right⌉$ bits in the RA field are valid, where ┌ ┐ is rounding up, and ${N}_{G}^{BWP}$ is a quantity of RA granularities used for RA in the activated BWP.

Optionally, the DCI includes DCI whose CRC code is scrambled with a specific RNTI; and/or
the length of the RA field is determined according to a size of an initial BWP of the terminal based on an RA granularity being one VRB.

It needs to be noted that, as an implementation in a network side device corresponding to the embodiment shown in Fig. 2, reference may be made to the related description of the embodiment shown in Fig. 2 for a specific implementation of this embodiment. To avoid repetition, details are not described in this embodiment again, and the same beneficial effects can be achieved.

Referring to Fig. 5, Fig. 5 is a structural diagram of a terminal according to an embodiment of the present disclosure. As shown in Fig. 5, a terminal 500 includes:
a receiving module 501, configured to receive, within an activated BWP, DCI transmitted by a network side device, where the DCI includes an RA field; and
a determination module 502, configured to determine, according to the size of the activated BWP, RA information indicated by the RA field.

Optionally, the DCI is transmitted in a CSS within a CORESETO, the activated BWP includes the entire CORESETO, and the CORESETO is a CORESET configured in a PBCH.

The determination module 502 is configured to: determine an RA granularity of the RA field according to the size of the activated BWP, and optionally, determine, according to the RA granularity, the RA information indicated by the RA field; or, optionally,
the determination module 502 is configured to: perform a padding operation or a truncation operation on the RA field according to the size of the activated BWP to obtain target information, and determine the RA information according to the target information.

Optionally, the determination module 502 is configured to: determine the RA granularity of the RA field according to a comparison result between the size of the activated BWP and the size of an initial BWP, and determine, according to the RA granularity, the RA information indicated by the RA field; or
the determination module 502 is configured to: perform the padding operation or the truncation operation on the RA field according to the size of the activated BWP to obtain the target information, and determine the RA information according to the target information.

Optionally, the determination module 502 is configured to: if the size of the activated BWP is greater than the size of the initial BWP, determine that the RA granularity of the RA field is N VRBs, and determine, according to the RA granularity, the RA information indicated by the RA field, where N is an integer obtained by rounding down a quotient, and the quotient is a quotient of dividing the size of the activated BWP by the size of the initial BWP; or
the determination module 502 is configured to: if the size of the activated BWP is greater than the size of the initial BWP, determine that the RA granularity of the RA field is M VRBs, and determine, according to the RA granularity, the RA information indicated by the RA field, where M is an integer obtained by rounding up a quotient, and the quotient is a quotient of dividing the size of the activated BWP by the size of the initial BWP; or
the determination module 502 is configured to: if the size of the activated BWP is less than or equal to the size of the initial BWP, determine that the RA granularity of the RA field is one VRB, and determine, according to the RA granularity, the RA information indicated by the RA field.

Optionally, if the RA granularity is M VRBs, the first $\left⌈{log}_{2}\left({N}_{G}^{BWP}\left({N}_{G}^{BWP}+1\right)/2\right)\right⌉$ bits in the RA field are valid or the last $\left⌈{log}_{2}\left({N}_{G}^{BWP}\left({N}_{G}^{BWP}+1\right)/2\right)\right⌉$ bits in the RA field are valid, where ┌ ┐is rounding up, and ${N}_{G}^{BWP}$ is a quantity of RA granularities used for RA in the activated BWP.

Optionally, the determination module 502 is configured to: if the size of the activated BWP is greater than the size of the initial BWP, determine a target length of the RA field, after the bits of the RA field are obtained through decoding, first pad L-L_{RA} 0s or 1s before the bits of the RA field to obtain the target information with L bits, and then determine the RA information according to the target information with the L bits, where L is equal to the target length, and L_{RA} is the length of the RA field;
the determination module 502 is configured to: if the size of the activated BWP is greater than the size of the initial BWP, determine a target length of the RA field, after the bits of the RA field are obtained through decoding, first pad L-L_{RA} 0s or 1s after the bits of the RA field to obtain the target information with L bits, and then determine the RA information according to the target information with the L bits, where L is equal to the target length, and L_{RA} is the length of the RA field; or
the determination module 502 is configured to: if the size of the activated BWP is less than the size of the initial BWP, determine a target length of the RA field, after the bits of the RA field are obtained through decoding, first perform truncation on the bits of the RA field to obtain first L bits or last L bits to obtain the target information with the L bits, and then determine the RA information according to the target information with the L bits, where L is equal to the target length.

Optionally, $L = \left⌈{log}_{2}\left({N}_{RB}^{currentBWP}\left({N}_{RB}^{currentBWP}+1\right)/2\right)\right⌉$, where ┌ ┐is rounding up, and ${N}_{RB}^{currentBWP}$ is a quantity of RBs in the activated BWP.

Optionally, the DCI includes DCI whose CRC code is scrambled with a specific RNTI; and/or
the length of the RA field is determined according to a size of an initial BWP of the terminal based on an RA granularity being one VRB.

It needs to be noted that the terminal 500 in this embodiment may be the terminal in any implementation in the method embodiments of the present disclosure. Any implementation of the terminal in the method embodiments of the present disclosure may be achieved by the terminal 500 in this embodiment, and the same beneficial effects can be achieved. Details are not described herein again.

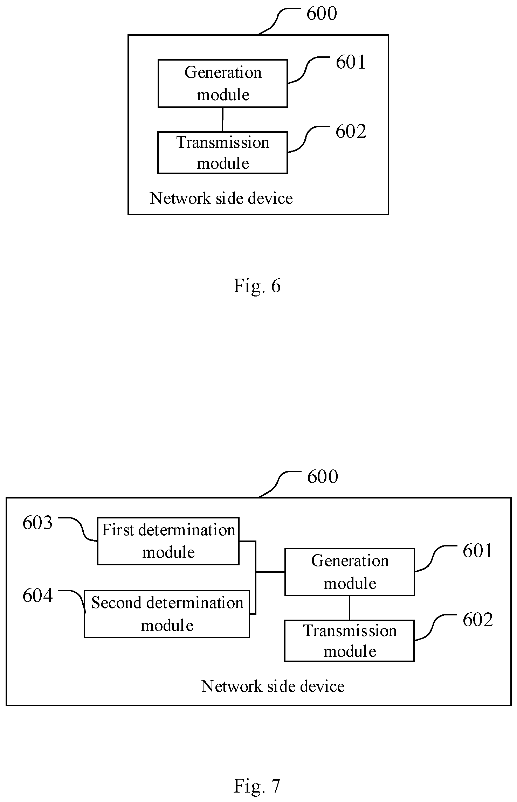

Referring to Fig. 6, Fig. 6 is a structural diagram of a network side device according to an embodiment of the present disclosure. As shown in Fig. 6, a network side device 600 includes:
a generation module 601, configured to generate DCI, where the DCI includes an RA field; and
a transmission module 602, configured to transmit the DCI to a terminal in an activated BWP of the terminal, so that the terminal determines, according to the size of the activated BWP, RA information indicated by the RA field.

Optionally, the DCI is transmitted in a CSS within a CORESETO, the activated BWP includes the entire CORESETO, and the CORESETO is a CORESET configured in a PBCH.

As shown in Fig. 7, the network side device 600 further includes:
a first determination module 603, configured to determine an RA granularity of the RA field according to the size of the activated BWP; and, optionally,
a second determination module 604, configured to determine that an RA granularity of the RA field is one VRB.

Optionally, the first determination module 603 is configured to determine the RA granularity of the RA field according to a comparison result between the size of the activated BWP and the size of an initial BWP.

Optionally, the first determination module 603 is configured to: if the size of the activated BWP is greater than the size of the initial BWP, determine that the RA granularity of the RA field is N VRBs, where N is an integer obtained by rounding down a quotient, and the quotient is a quotient of dividing the size of the activated BWP by the size of the initial BWP; or
the first determination module 603 is configured to: if the size of the activated BWP is greater than the size of the initial BWP, determine that the RA granularity of the RA field is M VRBs, where M is an integer obtained by rounding up a quotient, and the quotient is a quotient of dividing the size of the activated BWP by the size of the initial BWP.

Optionally, the first determination module 603 is configured to: if the size of the activated BWP is less than or equal to the size of the initial BWP, determine that the RA granularity of the RA field is one VRB.

Optionally, if the RA granularity is M VRBs, the first $\left⌈{log}_{2}\left({N}_{G}^{BWP}\left({N}_{G}^{BWP}+1\right)/2\right)\right⌉$ bits in the RA field are valid or the last $\left⌈{log}_{2}\left({N}_{G}^{BWP}\left({N}_{G}^{BWP}+1\right)/2\right)\right⌉$ bits in the RA field are valid, where ┌ ┐ is rounding up, and ${N}_{G}^{BWP}$ is a quantity of RA granularities used for RA in the activated BWP.

Optionally, the DCI includes DCI whose CRC code is scrambled with a specific RNTI; and/or
the length of the RA field is determined according to a size of an initial BWP of the terminal based on an RA granularity being one VRB.

It needs to be noted that the network side device 600 in this embodiment may be the network side device in any implementation in the method embodiments of the present disclosure. Any implementation of the network side device in the method embodiments of the present disclosure may be achieved by the network side device 600 in this embodiment, and the same beneficial effects can be achieved. Details are not described herein again.

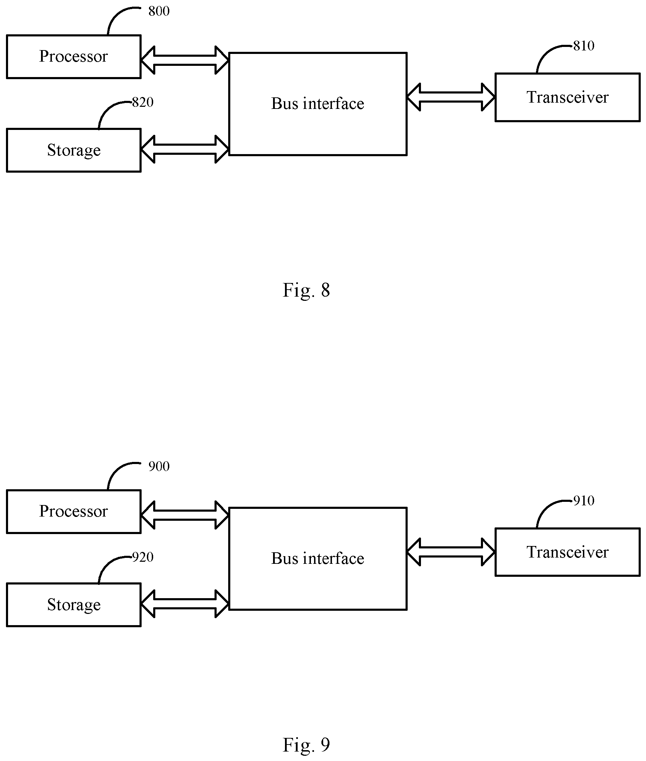

Referring to Fig. 8, Fig. 8 is another structural diagram of a terminal according to an embodiment of the present disclosure. As shown in Fig. 8, the terminal includes a transceiver 810, a storage 820, a processor 800, and a computer program stored in the storage 820 and configured to be executed by the processor, where
the transceiver 810 is configured for: receiving, within an activated BWP, DCI transmitted by a network side device, where the DCI includes an RA field; and
determining, according to the size of the activated BWP, RA information indicated by the RA field;
   or
the transceiver 810 is configured for receiving, within an activated BWP, DCI transmitted by a network side device, where the DCI includes an RA field; and
the processor 800 is configured to read the program in the storage 820 to perform the following process:
   determining, according to the size of the activated BWP, RA information indicated by the RA field.

The transceiver 810 may be configured to receive and transmit data under the control of the processor 800.

In Fig. 8, a bus architecture may include any quantity of interconnected buses and bridges. Specifically, various circuits such as one or more processors represented by the processor 800 and a storage represented by the storage 820 are linked together. The bus architecture may also link various other circuits such as peripherals, voltage regulators, and power management circuits, which are well known in the art, and therefore are not further described herein. A bus interface provides an interface. The transceiver 810 may include a plurality of elements, that is, a transmitter and a receiver, to provide units for communicating with various other apparatuses over a transmission medium.

The processor 800 is responsible for managing the bus architecture and general processing. The storage 820 can store data used by the processor 800 while performing operations.

It needs to be noted that the storage 820 is not limited to being located on the terminal. The storage 820 and the processor 800 may be located separately at different geographical locations.

Optionally, the DCI is transmitted in a CSS within a CORESETO, the activated BWP includes the entire CORESETO, and the CORESETO is a CORESET configured in a PBCH.

Optionally, the determining, according to the size of the activated BWP, the RA information indicated by the RA field includes:
determining an RA granularity of the RA field according to the size of the activated BWP, and determining, according to the RA granularity, the RA information indicated by the RA field; or
performing a padding operation or a truncation operation on the RA field according to the size of the activated BWP to obtain target information, and determining the RA information according to the target information.

Optionally, the determining the RA granularity of the RA field according to the size of the activated BWP includes:
determining the RA granularity of the RA field according to a comparison result between the size of the activated BWP and the size of an initial BWP;
   or
the performing the padding operation or the truncation operation on the RA field according to the size of the activated BWP to obtain the target information, and determining the RA information according to the target information includes:
   performing the padding operation or the truncation operation on the RA field according to a comparison result between the size of the activated BWP and the size of an initial BWP to obtain the target information, and determining the RA information according to the target information.

Optionally, the determining the RA granularity of the RA field according to the comparison result between the size of the activated BWP and the size of the initial BWP includes:
if the size of the activated BWP is greater than the size of the initial BWP, determining that the RA granularity of the RA field is N VRBs, where N is an integer obtained by rounding down a quotient, and the quotient is a quotient of dividing the size of the activated BWP by the size of the initial BWP; or
if the size of the activated BWP is greater than the size of the initial BWP, determining that the RA granularity of the RA field is M VRBs, where M is an integer obtained by rounding up a quotient, and the quotient is a quotient of dividing the size of the activated BWP by the size of the initial BWP; or
if the size of the activated BWP is less than or equal to the size of the initial BWP, determining that the RA granularity of the RA field is one VRB.

Optionally, if the RA granularity is M VRBs, the first $\left⌈{log}_{2}\left({N}_{G}^{BWP}\left({N}_{G}^{BWP}+1\right)/2\right)\right⌉$ bits in the RA field are valid or the last $\left⌈{log}_{2}\left({N}_{G}^{BWP}\left({N}_{G}^{BWP}+1\right)/2\right)\right⌉$ bits in the RA field are valid, where ┌ ┐ is rounding up, and ${N}_{G}^{BWP}$ is a quantity of RA granularities used for RA in the activated BWP.

Optionally, the performing the padding operation or the truncation operation on the RA field according to the comparison result between the size of the activated BWP and the size of the initial BWP to obtain the target information, and determining the RA information according to the target information includes:
if the size of the activated BWP is greater than the size of the initial BWP, determining, by the terminal, a target length of the RA field, after the bits of the RA field are obtained through decoding, first padding L-L_{RA} 0s or 1s before the bits of the RA field to obtain the target information with L bits, and then determining the RA information according to the target information with the L bits, where L is equal to the target length, and L_{RA} is the length of the RA field;
if the size of the activated BWP is greater than the size of the initial BWP, determining, by the terminal, a target length of the RA field, after the bits of the RA field are obtained through decoding, first padding L-L_{RA} 0s or 1s after the bits of the RA field to obtain the target information with L bits, and then determining the RA information according to the target information with the L bits, where L is equal to the target length, and L_{RA} is the length of the RA field; or
if the size of the activated BWP is less than the size of the initial BWP, determining, by the terminal, a target length of the RA field, after the bits of the RA field are obtained through decoding, first performing truncation on the bits of the RA field to obtain first L bits or last L bits to obtain the target information with the L bits, and then determining the RA information according to the target information with the L bits, where L is equal to the target length.

Optionally, $L = \left⌈{log}_{2}\left({N}_{RB}^{currentBWP}\left({N}_{RB}^{currentBWP}+1\right)/2\right)\right⌉$, where ┌ ┐is rounding up, and ${N}_{RB}^{currentBWP}$ is a quantity of RBs in the activated BWP.

Optionally, the DCI includes DCI whose CRC code is scrambled with a specific RNTI; and/or
the length of the RA field is determined according to a size of an initial BWP of the terminal based on an RA granularity being one VRB.

It needs to be noted that the terminal in this embodiment may be the terminal in any implementation in the method embodiments of the present disclosure. Any implementation of the terminal in the method embodiments of the present disclosure may be achieved by the terminal in this embodiment, and the same beneficial effects can be achieved. Details are not described herein again.

Referring to Fig. 9, Fig. 9 is another structural diagram of a network side device according to an embodiment of the present disclosure. As shown in Fig. 9, the network side device includes a transceiver 910, a storage 920, a processor 900, and a computer program stored in the storage 920 and configured to be executed by the processor, where
the transceiver 910 is configured for generating DCI, where the DCI includes an RA field; and
transmitting the DCI to a terminal in an activated BWP of the terminal, so that the terminal determines, according to the size of the activated BWP, RA information indicated by the RA field;
   or
the processor 900 is configured to read the program in the storage 920 to perform the following process:
   generating DCI, where the DCI includes an RA field; and
   the transceiver 910 is configured for transmitting the DCI to a terminal in an activated BWP of the terminal, so that the terminal determines, according to the size of the activated BWP, RA information indicated by the RA field.

The transceiver 910 may be configured to receive and transmit data under the control of the processor 900.

In Fig. 9, a bus architecture may include any quantity of interconnected buses and bridges. Specifically, various circuits such as one or more processors represented by the processor 900 and a storage represented by the storage 920 are linked together. The bus architecture may also link various other circuits such as peripherals, voltage regulators, and power management circuits, which are well known in the art, and therefore are not further described herein. A bus interface provides an interface. The transceiver 910 may include a plurality of elements, that is, a transmitter and a receiver, to provide units for communicating with various other apparatuses over a transmission medium.

The processor 900 is responsible for managing the bus architecture and general processing. The storage 920 can store data used by the processor 900 while performing operations.

It needs to be noted that the storage 920 is not limited to being located on the network side device. The storage 920 and the processor 900 may be located separately at different geographical locations.

Optionally, the DCI is transmitted in a CSS within a CORESETO, the activated BWP includes the entire CORESETO, and the CORESETO is a CORESET configured in a PBCH.

The processor 900 or the transceiver 910 is further configured for:
determining an RA granularity of the RA field according to the size of the activated BWP; and, optionally,
determining that an RA granularity of the RA field is one VRB.

Optionally, the determining the RA granularity of the RA field according to the size of the activated BWP includes:
determining the RA granularity of the RA field according to a comparison result between the size of the activated BWP and the size of an initial BWP.

Optionally, the determining the RA granularity of the RA field according to the comparison result between the size of the activated BWP and the size of the initial BWP includes:
if the size of the activated BWP is greater than the size of the initial BWP, determining that the RA granularity of the RA field is N VRBs, where N is an integer obtained by rounding down a quotient, and the quotient is a quotient of dividing the size of the activated BWP by the size of the initial BWP; or
if the size of the activated BWP is greater than the size of the initial BWP, determining that the RA granularity of the RA field is M VRBs, where M is an integer obtained by rounding up a quotient, and the quotient is a quotient of dividing the size of the activated BWP by the size of the initial BWP; or
if the size of the activated BWP is less than or equal to the size of the initial BWP, determining that the RA granularity of the RA field is one VRB.

Optionally, if the RA granularity is M VRBs, the first bits in the RA field are valid or the last $\left⌈{log}_{2}\left({N}_{G}^{BWP}\left({N}_{G}^{BWP}+1\right)/2\right)\right⌉$ bits in the RA field are valid, where ┌ ┐ is rounding up, and ${N}_{G}^{BWP}$ is a quantity of RA granularities used for RA in the activated BWP.

Optionally, the DCI includes DCI whose CRC code is scrambled with a specific RNTI; and/or
the length of the RA field is determined according to a size of an initial BWP of the terminal based on an RA granularity being one VRB.

It needs to be noted that the network side device in this embodiment may be the network side device in any implementation in the method embodiments of the present disclosure. Any implementation of the network side device in the method embodiments of the present disclosure may be implemented by the network side device in this embodiment, and the same beneficial effects can be achieved. Details are not described herein again.

The present disclosure further provides in some embodiments a computer-readable storage medium storing therein a computer program, where the program is configured to be executed by a processor to implement the steps in the RA method on the terminal side provided in the embodiments of the present disclosure or implement the steps in the RA method on the network side device side provided in the embodiments of the present disclosure.

In several embodiments provided in the present application, it should be understood that the disclosed method and apparatus may be implemented in other forms. For example, the described apparatus embodiment is merely an example. For example, the unit division is merely logical function division and may be other division in actual implementation. For example, a plurality of units or components may be combined or integrated into another system, or some features may be ignored or not performed. In addition, the shown or discussed mutual couplings or direct couplings or communication connections may be implemented through some interfaces, indirect couplings or communication connections between the apparatuses or units, and may be electrical connections, mechanical connections, or connections in other forms.

In addition, functional units in the embodiments of the present disclosure may be integrated into one processing unit, or each of the units may exist alone physically, or two or more units are integrated into one unit. The integrated unit may be implemented in the form of hardware, or in the form of hardware plus software functional unit.

The integrated unit implemented in the form of a software functional unit may be stored in a computer-readable storage medium. The software functional units are stored in a storage medium, and include several instructions for instructing a computer device (which may be a personal computer, a server or a network device) to perform some steps of the methods in the embodiments of the present disclosure. The foregoing storage medium includes various media that can store program codes, such as a universal serial bus (USB) flash drive, a removable hard disk, a read-only memory (ROM), a random access memory (RAM), a magnetic disk or an optical disc.

The foregoing descriptions are preferred implementations of the present disclosure.

## Claims

1. A terminal (11), including: a transceiver (810), a storage (820), a processor (800), and a program stored in the storage (820) and configured to be executed by the processor (800), wherein the terminal (11) is configured for:
receiving, within an activated bandwidth part, BWP, downlink control information, DCI, transmitted by a network side device (12), where the DCI includes a resource allocation, RA, field; and
determining, according to a size of the activated BWP, an RA granularity of the RA field according to floor (BWP_{current} / BWPᵢₙᵢₜᵢₐₗ),
where floor represents rounding down, BWP_{current} represents the quantity of resource blocks included in the activated BWP, and BWPᵢₙᵢₜᵢₐₗ represents the quantity of resource blocks included in an initial BWP.

2. The terminal (11) of claim 1, wherein:
if the size of the activated BWP is greater than the size of the initial BWP, then the determining of the RA granularity of the RA field is according to floor (BWP_{current} / BWPᵢₙᵢₜᵢₐₗ), and
if the size of the activated BWP is less than or equal to the size of the initial BWP, then the RA granularity of the RA field is determined to be one VRB.

3. The terminal (11) of claims 1 or 2, wherein the transceiver (810) is configured for:
the receiving of the DCI transmitted by the network side device (12); and
the determining of the RA granularity of the RA field.

4. The terminal (11) of claims 1 or 2, wherein:
the transceiver (810) is configured for: the receiving of the DCI transmitted by the network side device (12); and
the processor (800) is configured to read the program in the storage (820) to perform the following process: the determining of the RA granularity of the RA field.

5. The terminal (11) according to any of claims 1 to 4, wherein the DCI is transmitted in a common search space, CSS, within a control resource set 0, CORESETO, the activated BWP includes the entire CORESETO, and the CORESETO is a CORESET configured in a physical broadcast channel, PBCH.

6. The terminal (11) according to any of claims 1 to 5, further comprising determining, according to the size of the activated BWP, RA information indicated by the RA field, wherein the determining of the RA information includes:
determining, according to the RA granularity, the RA information indicated by the RA field.

7. The terminal (11) according to any one of claims 1 to 6, wherein the DCI includes DCI whose cyclic redundancy check, CRC, code is scrambled with a specific radio network temporary identifier, RNTI; and/or
the length of the RA field is determined according to a size of the initial BWP of the terminal (11) based on a RA granularity being one VRB.

8. The terminal (11) according to claim 1, wherein the length of the RA field is determined according to an initial downlink, DL, BWP.

9. A network side device (12), including: a transceiver (910), a storage (920), a processor (900), and a program stored in the storage (920) and configured to be executed by the processor (900), wherein the network side device (12) is configured for:
generating downlink control information, DCI, where the DCI includes a resource allocation, RA, field; and
transmitting the DCI to a terminal (11) in an activated bandwidth part, BWP, of the terminal (11), so that the terminal (11) determines, according to a size of the activated BWP, an RA granularity of the RA field according to floor (BWP_{current} / BWPᵢₙᵢₜᵢₐₗ),
where floor represents rounding down, BWP_{current} represents the quantity of resource blocks included in the activated BWP, and BWPᵢₙᵢₜᵢₐₗ represents the quantity of resource blocks included in an initial BWP.

10. The network side device (12) of claim 9, wherein:
if the size of the activated BWP is greater than the size of the initial BWP, then the determining of the RA granularity of the RA field is according to floor (BWP_{current} / BWPᵢₙᵢₜᵢₐₗ), and
if the size of the activated BWP is less than or equal to the size of the initial BWP, then the RA granularity of the RA field is determined to be one VRB.

11. The network side device (12) of claims 9 or 10, wherein the transceiver (910) is configured for:
the generating of the DCI; and
the transmitting of the DCI to the terminal (11), so that the terminal (11) determines the RA granularity of the RA field.

12. The network side device (12) of claims 9 or 10, wherein:
the processor (900) is configured to read the program in the storage (920) to perform the following process:
the generating of the DCI; and
the transceiver (910) is configured for:
the transmitting of the DCI to the terminal (11), so that the terminal (11) determines the RA granularity of the RA field.

13. The network side device (12) according to any of claims 9 to 12, wherein the DCI is transmitted in a common search space, CSS, within a control resource set 0, CORESETO, the activated BWP includes the entire CORESETO, and the CORESETO is a CORESET configured in a physical broadcast channel, PBCH.

## Patentansprüche

1. Endgerät (11), einschließend: einen Transceiver (810), einen Speicher (820), einen Prozessor (800) und ein Programm, das in dem Speicher (820) gespeichert und konfiguriert ist, um von dem Prozessor (800) ausgeführt zu werden, wobei das Endgerät (11) konfiguriert ist zum:
Empfangen, innerhalb eines aktivierten Bandbreitenteils, BWP, von Downlink-Steuerinformationen, DCI, die durch eine netzwerkseitige Vorrichtung (12) übertragen werden, wobei die DCI ein Ressourcenzuweisungsfeld, RA-Feld, einschließen; und
Bestimmen, gemäß einer Größe des aktivierten BWP, einer RA-Granularität des RA-Felds gemäß Floor-Funktion (BWPₐₖₜᵤₑₗₗ / BWP_{anfänglich}),
wobei Floor-Funktion Abrunden darstellt, BWPₐₖₜᵤₑₗₗ die Anzahl der in dem aktivierten BWP eingeschlossenen Ressourcenblöcke darstellt und BWP_{anfänglich} die Anzahl der in einem anfänglichen BWP eingeschlossenen Ressourcenblöcke darstellt.

2. Endgerät (11) nach Anspruch 1, wobei:
wenn die Größe des aktivierten BWP größer als die Größe des anfänglichen BWP ist, das Bestimmen der RA-Granularität des RA-Felds gemäß Floor-Funktion (BWPₐₖₜᵤₑₗₗ / BWP_{anfänglich}) erfolgt, und
wenn die Größe des aktivierten BWP kleiner oder gleich der Größe des anfänglichen BWP ist, die RA-Granularität des RA-Felds als ein VRB bestimmt wird.

3. Endgerät (11) nach Anspruch 1 oder 2, wobei der Transceiver (810) konfiguriert ist für:
das Empfangen der von der netzwerkseitigen Vorrichtung (12) übertragenen DCI; und
das Bestimmen der RA-Granularität des RA-Felds.

4. Endgerät (11) nach Anspruch 1 oder 2, wobei:
der Transceiver (810) konfiguriert ist für: das Empfangen der von der netzwerkseitigen Vorrichtung (12) übertragenen DCI; und
der Prozessor (800) konfiguriert ist, um das Programm in dem Speicher (820) zu lesen, um den folgenden Prozess durchzuführen: das Bestimmen der RA-Granularität des RA-Felds.

5. Endgerät (11) nach einem der Ansprüche 1 bis 4, wobei die DCI in einem gemeinsamen Suchraum, CSS, innerhalb eines Steuerressourcensatzes 0, CORESET0, übertragen werden, der aktivierte BWP den gesamten CORESET0 einschließt und der CORESET0 ein CORESET ist, der in einem physikalischen Broadcast-Kanal, PBCH, konfiguriert ist.

6. Endgerät (11) nach einem der Ansprüche 1 bis 5, ferner umfassend Bestimmen von RA-Informationen, die durch das RA-Feld angezeigt werden, gemäß der Größe des aktivierten BWP, wobei das Bestimmen der RA-Informationen einschließt:
Bestimmen, gemäß der RA-Granularität, der durch das RA-Feld angezeigten RA-Informationen.

7. Endgerät (11) nach einem der Ansprüche 1 bis 6, wobei die DCI DCI einschließen, deren Code für eine zyklische Redundanzprüfung, CRC, mit einer spezifischen temporären Funknetzwerk-Kennung, RNTI, verwürfelt ist; und/oder
die Länge des RA-Felds gemäß einer Größe des anfänglichen BWP des Endgeräts (11) basierend auf einer RA-Granularität, die ein VRB ist, bestimmt wird.

8. Endgerät (11) nach Anspruch 1, wobei die Länge des RA-Felds gemäß einem anfänglichen Downlink-BWP, DL-BWP, bestimmt wird.

9. Netzwerkseitige Vorrichtung (12), einschließend: einen Transceiver (910), einen Speicher (920), einen Prozessor (900) und ein Programm, das in dem Speicher (920) gespeichert und konfiguriert ist, um von dem Prozessor (900) ausgeführt zu werden, wobei die netzwerkseitige Vorrichtung (12) konfiguriert ist für:
Erzeugen von Downlink-Steuerinformationen, DCI, wobei die DCI ein Ressourcenzuweisungsfeld, RA-Feld, einschließen; und
Übertragen der DCI an ein Endgerät (11) in einem aktivierten Bandbreitenteil, BWP, des Endgeräts (11), sodass das Endgerät (11) gemäß einer Größe des aktivierten BWP eine RA-Granularität des RA-Felds gemäß Floor-Funktion (BWPₐₖₜᵤₑₗₗ / BWP_{anfänglich}) bestimmt,
wobei Floor-Funktion Abrunden darstellt, BWPₐₖₜᵤₑₗₗ die Anzahl der in dem aktivierten BWP eingeschlossenen Ressourcenblöcke darstellt und BWP_{anfänglich} die Anzahl der in einem anfänglichen BWP eingeschlossenen Ressourcenblöcke darstellt.

10. Netzwerkseitige Vorrichtung (12) nach Anspruch 9, wobei:
wenn die Größe des aktivierten BWP größer als die Größe des anfänglichen BWP ist, das Bestimmen der RA-Granularität des RA-Felds gemäß Floor-Funktion (BWPₐₖₜᵤₑₗₗ / BWP_{anfänglich}) erfolgt, und
wenn die Größe des aktivierten BWP kleiner oder gleich der Größe des anfänglichen BWP ist, die RA-Granularität des RA-Felds als ein VRB bestimmt wird.

11. Netzwerkseitige Vorrichtung (12) nach Ansprüchen 9 oder 10, wobei der Transceiver (910) konfiguriert ist für:
das Erzeugen der DCI; und
das Übertragen der DCI an das Endgerät (11), sodass das Endgerät (11) die RA-Granularität des RA-Felds bestimmt.

12. Netzwerkseitige Vorrichtung (12) nach Ansprüchen 9 oder 10, wobei:
der Prozessor (900) konfiguriert ist, um das Programm in dem Speicher (920) zu lesen, um den folgenden Prozess durchzuführen:
das Erzeugen der DCI; und
der Transceiver (910) konfiguriert ist für:
das Senden der DCI an das Endgerät (11), sodass das Endgerät (11)
die RA-Granularität des RA-Felds bestimmt.

13. Netzwerkseitige Vorrichtung (12) nach einem der Ansprüche 9 bis 12, wobei die DCI in einem gemeinsamen Suchraum, CSS, innerhalb eines Steuerressourcensatzes 0, CORESET0, übertragen werden, der aktivierte BWP den gesamten CORESET0 einschließt und der CORESET0 ein CORESET ist, der in einem physikalischen Broadcast-Kanal, PBCH, konfiguriert ist.

## Revendications

1. Terminal (11), comportant : un transcepteur (810), un stockage (820), un processeur (800), et un programme stocké dans le stockage (820) et configuré pour être exécuté par le processeur (800), dans lequel le terminal (11) est configuré pour :
la réception, au sein d'une partie de largeur de bande, BWP, activée, d'informations de commande de liaison descendante, DCI, transmises par un dispositif côté réseau (12), où les DCI comportent un champ d'allocation de ressources, RA ; et
la détermination, selon une taille de la BWP activée, d'une granularité RA du champ RA selon la partie entière de (BWP_{actuelle} / BWPᵢₙᵢₜᵢₐₗₑ),
où la partie entière représente un arrondi vers le bas, BWP_{actuelle} représente la quantité de blocs de ressource inclus dans la BWP activée, et BWPᵢₙᵢₜᵢₐₗₑ représente la quantité de blocs de ressource inclus dans une BWP initiale.

2. Terminal (11) selon la revendication 1, dans lequel :
si la taille de la BWP activée est plus grande que la taille de la BWP initiale, alors la détermination de la granularité RA du champ RA est selon la partie entière de (BWP_{actuelle} / BWPᵢₙᵢₜᵢₐₗₑ), et
si la taille de la BWP activée est inférieure ou égale à la taille de la BWP initiale, alors la granularité RA du champ RA est déterminée comme étant un VRB.

3. Terminal (11) selon les revendications 1 ou 2, dans lequel le transcepteur (810) est configuré pour :
la réception des DCI transmises par le dispositif côté réseau (12) ; et
la détermination de la granularité RA du champ RA.

4. Terminal (11) selon les revendications 1 ou 2, dans lequel :
le transcepteur (810) est configuré pour : la réception des DCI transmises par le dispositif côté réseau (12) ; et
le processeur (800) est configuré pour lire le programme dans le stockage (820) pour mettre en œuvre le processus suivant : la détermination de la granularité RA du champ RA.

5. Terminal (11) selon l'une quelconque des revendications 1 à 4, dans lequel les DCI sont transmises dans un espace de recherche commun, CSS, au sein d'un ensemble de ressources de commande 0, CORESET0, la BWP activée comporte le CORESET0 entier, et le CORESET0 est un CORESET configuré dans un canal de diffusion physique, PBCH.

6. Terminal (11) selon l'une quelconque des revendications 1 à 5, comprenant en outre la détermination, selon la taille de la BWP activée, d'informations RA indiquées par le champ RA, dans lequel la détermination des informations RA comporte :
la détermination, selon la granularité RA, des informations RA indiquées par le champ RA.

7. Terminal (11) selon l'une quelconque des revendications 1 à 6, dans lequel les DCI comportent des DCI dont un code de contrôle de redondance cyclique, CRC, est brouillé avec un identificateur temporaire de réseau radio, RNTI, spécifique ; et/ou
la longueur du champ RA est déterminée selon une taille de la BWP initiale du terminal (11) en fonction d'une granularité RA étant un VRB.

8. Terminal (11) selon la revendication 1, dans lequel la longueur du champ RA est déterminée selon une BWP de liaison descendante, DL, initiale.

9. Dispositif côté réseau (12), comportant : un transcepteur (910), un stockage (920), un processeur (900), et un programme stocké dans le stockage (920) et configuré pour être exécuté par le processeur (900), dans lequel le dispositif côté réseau (12) est configuré pour :
la génération d'informations de commande de liaison descendante, DCI, où les DCI comportent un champ d'allocation de ressources, RA ; et
la transmission des DCI à un terminal (11) dans une partie de largeur de bande, BWP, activée du terminal (11), de sorte que le terminal (11) détermine, selon une taille de la BWP activée, une granularité RA du champ RA selon la partie entière de (BWP_{actuelle} / BWPᵢₙᵢₜᵢₐₗₑ),
où la partie entière représente un arrondi vers le bas, BWP_{actuelle} représente la quantité de blocs de ressource inclus dans la BWP activée, et BWPᵢₙᵢₜᵢₐₗₑ représente la quantité de blocs de ressource inclus dans une BWP initiale.

10. Dispositif côté réseau (12) selon la revendication 9, dans lequel :
si la taille de la BWP activée est plus grande que la taille de la BWP initiale, alors la détermination de la granularité RA du champ RA est selon la partie entière de (BWP_{actuelle} / BWPᵢₙᵢₜᵢₐₗₑ), et
si la taille de la BWP activée est inférieure ou égale à la taille de la BWP initiale, alors la granularité RA du champ RA est déterminée comme étant un VRB.

11. Dispositif côté réseau (12) selon les revendications 9 ou 10, dans lequel le transcepteur (910) est configuré pour :
la génération des DCI ; et
la transmission des DCI au terminal (11), de sorte que le terminal (11) détermine la granularité RA du champ RA.

12. Dispositif côté réseau (12) selon les revendications 9 ou 10, dans lequel :
le processeur (900) est configuré pour lire le programme dans le stockage (920) pour mettre en œuvre le processus suivant :
la génération des DCI ; et
le transcepteur (910) est configuré pour :
la transmission des DCI au terminal (11), de sorte que le terminal (11)
détermine la granularité RA du champ RA.

13. Dispositif côté réseau (12) selon l'une quelconque des revendications 9 à 12, dans lequel les DCI sont transmises dans un espace de recherche commun, CSS, au sein d'un ensemble de ressources de commande 0, CORESET0, la BWP activée comporte le CORESET0 entier, et le CORESET0 est un CORESET configuré dans un canal de diffusion physique, PBCH.
